# EUROPEAN PATENT APPLICATION

(11) **EP 4 742 768 A1**
(43) Date of publication of application: **13.05.2026**
(21) Application number: 23944566.1
(22) Date of filing: 07.07.2023
(51) Int. Cl.: H04W 52/02

(54) **WIRELESS COMMUNICATION METHODS, TERMINAL DEVICES AND COMMUNICATION DEVICES**

(71) Applicant: GUANGDONG OPPO MOBILE TELECOMMUNICATIONS CORP., LTD., Dongguan, Guangdong 523860 (CN)
(72) Inventor: HU, Yi, Dongguan, Guangdong 523860 (CN); LI, Haitao, Dongguan, Guangdong 523860 (CN)
(74) Representative: Penza, Giancarlo
(86) International application number: PCT/CN2023/106379
(87) International publication number: WO 2025/010543

(57) **Abstract**

Provided in the present application are wireless communication methods, terminal devices and communication devices. A method comprises: a terminal device triggers or sends first information, the first information being used for indicating an energy storage condition of the terminal device. During resource allocation and scheduling, the present application can consider energy storage conditions of terminal devices on the basis of the first information, thus enabling wireless power supply to satisfy stability and reliability requirements of data transmission; and on the basis of the energy storage conditions of the terminal devices, the present application can implement on-demand energy supply during the wireless energy supply, thus reducing the resource overhead for peer wireless energy supply as much as possible. In addition, from the perspective of resource management, the present application can achieve good and efficient cooperation between energy supply processes and data transmission processes, thereby realizing data transmission in scenarios such as zero-power communication.

## Description

### TECHNICAL FIELD

The disclosure relates to the technical field of communication, and more particularly to a method for wireless communication, a terminal device and a communication device.

### BACKGROUND

With the development of technology, changes have been taken place in the energy supply conditions of terminal devices. For example, one potential challenge that terminal devices may face is limited energy supply. Taking the zero power terminal as an example, the zero power terminal must harvest a certain amount of energy before it can drive itself to operate. In other words, the data transmission process of the zero power terminal device relies on external energy supply (such as wireless energy supply from the network). Before obtaining energy, the zero power terminal is in a "shutdown" state, that is, the zero power terminal is unable to receive signals sent from the peer end. Therefore, in some cases, data transmission is not only related to communication requirements and resource scheduling, but also to the energy supply condition of the terminal device.

### SUMMARY

The disclosure provides a method for wireless communication, a terminal device and a communication device. The following is an introduction to various aspects involved in the disclosure.

In a first aspect, a method for wireless communication is provided, and the method includes the following operation. A terminal device triggers or sends first information. The first information indicates energy storage status of the terminal device.

In a second aspect, a method for wireless communication is provided, and the method includes the following operation. A first communication device receives first information from a terminal device. The first information indicates energy storage status of the terminal device.

In a third aspect, a terminal device is provided. The terminal device includes a triggering and sending unit. The triggering and sending unit is configured to trigger or send first information. The first information indicates energy storage status of the terminal device.

In a fourth aspect, a communication device is provided, and the communication device is a first communication device. The communication device includes a receiving unit. The receiving unit is configured to receive first information from a terminal device. The first information indicates energy storage status of the terminal device.

In a fifth aspect, a terminal device is provided. The terminal device includes a processor, and a memory. The memory is used to store one or more computer programs. The processor is configured to invoke the one or more computer programs in the memory to cause the terminal device to perform some or all of operations in the method of the first aspect.

In a sixth aspect, a communication device is provided. The communication device includes a processor, a memory and a transceiver. The memory is used to store one or more computer programs. The processor is configured to invoke the one or more computer programs in the memory to cause the communication device to perform some or all of operations in the method of the second aspect.

In a seventh aspect, a communication system is provided in an embodiment of the disclosure. The system includes the terminal device and/or the communication device described above. In another possible design, the system may also include other devices that interact with the terminal device or the communication device in solutions according to embodiments of the disclosure.

In an eighth aspect, a computer-readable storage medium is provided in an embodiment of the disclosure. The computer-readable storage medium has stored thereon a computer program that causes the terminal device and/or the communication device to perform some or all of operations in any of the methods of the aforementioned various aspects.

In a ninth aspect, a computer program product is provided in an embodiment of the disclosure. The computer program product includes a non-transitory computer-readable storage medium storing a computer program. The computer program is operable to cause the terminal device and/or the communication device to perform some or all of operations in any of the methods of the aforementioned various aspects. In some implementations, the computer program product may be a software installation package.

In a tenth aspect, a chip is provided in an embodiment of the disclosure. The chip includes a memory and a processor. The processor may invoke and run a computer program from the memory to implement some or all of operations described in any of the methods of the aforementioned various aspects.

Based on the first information, when allocating and scheduling resources, the energy storage status of the terminal device can be taken into consideration, thereby enabling wireless power supply to satisfy the stability and reliability requirements of data transmission. Moreover, the disclosure can also achieve on-demand wireless power supply based on the energy storage status of the terminal device, thus minimizing the resource overhead for peer side wireless power supply as much as possible. Furthermore, from the perspective of resource management, based on the disclosure, a good and efficient cooperation between the energy supply process and the data transmission process can be realized, thereby realizing data transmission in scenarios such as zero power communication.

### BRIEF DESCRIPTION OF THE DRAWINGS

FIG. 1 is a wireless communication system 100 applied in an embodiment of the disclosure.
FIG. 2 illustrates a possible structure of a power harvesting module.
FIG. 3 illustrates the principle of back scattering communication according to an embodiment of the disclosure.
FIG. 4 illustrates a circuit diagram of a terminal based on a resistive load modulation technology.
FIG. 5 is a schematic diagram of an encoding method of NRZ encoding.
FIG. 6 is a schematic diagram of an encoding method of Manchester encoding.
FIG. 7 is a schematic diagram of an encoding method of unipolar return-to-zero (RZ) encoding.
FIG. 8 is a schematic diagram of an encoding method of DBP encoding.
FIG. 9 is a schematic diagram of an encoding method of Miller encoding.
FIG. 10 is a schematic flowchart of a method for wireless communication according to an embodiment of the disclosure.
FIG. 11 is an example diagram of periodically reporting first information according to an embodiment of the disclosure.
FIG. 12 is a schematic structural diagram of a terminal device according to an embodiment of the disclosure.
FIG. 13 is a schematic structural diagram of a communication device according to an embodiment of the disclosure.
FIG. 14 is a schematic structural diagram of an apparatus for communication according to an embodiment of the disclosure.

### DETAILED DESCRIPTION

Hereinafter, the technical solutions in the disclosure will be described in conjunction with the accompanying drawings.

With the development of wireless communication technologies, there is an aspiration to integrate wireless communication systems with various vertical industries such as logistics, manufacturing, transportation, and energy. For example, a wireless communication system may be integrated with an industrial wireless sensor network (IWSN). For another example, a wireless communication system may be integrated with smart logistics and smart warehousing. For yet another example, a wireless communication system may be integrated with a smart home network.

However, in these industries, the terminal typically needs to have characteristics such as lower cost, smaller size (such as ultra-thin), maintenance-free and long service life. Therefore, in order to satisfy the above conditions, the zero power communication technology may be employed for communication between the network device and the terminal. In this case, the terminal may also be referred to as a "zero power terminal".

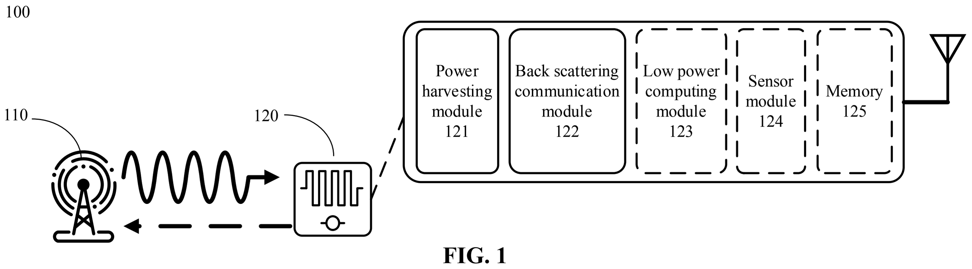

Hereinafter, the zero power communication technology and the zero power terminal will be introduced with reference to FIG. 1 to FIG. 9. FIG. 1 is an architecture of the zero power communication system 100 applicable to an embodiment of the disclosure. The architecture illustrated in FIG. 1 includes a network device 110 and a terminal 120. The network device 110 may be a device that communicates with the terminal 120. The network device 110 may provide communication coverage for a particular geographic area and may communicate with the terminal device 120 within that coverage area. Both the network device 110 and the terminal 120 may be referred to as communication devices.

The network device 110 is used to send a wireless power supply signal to the terminal 120 for powering the terminal. Accordingly, the terminal 120 may send data to the network device 110 via a back scattered signal. In some implementations, the wireless power supply signal may further carry data or control information sent from the network device 110 to the terminal 120. Of course, the above wireless power supply signal may also be used only for power supply, which is not limited in the embodiments of the disclosure.

It is to be noted that, FIG. 1 exemplifies a network device and a terminal. Optionally, the communication system 100 may include multiple network devices, and the coverage of each network device may include another number of terminal devices, which is not limited in the embodiment of the disclosure.

In addition, in some implementations, the communication system 100 may further include other network entities, such as a network controller, a mobility management entity, and the like, which is not limited in the embodiments of the disclosure.

It should be understood that the technical solutions in the embodiments of the disclosure may be applied to various communication systems, such as: a 5th generation (5G) system or a new radio (NR) system, a long term evolution (LTE) system, an LTE frequency division duplex (FDD) system, an LTE time division duplex (TDD) system, a cellular Internet of Things, and the like. The technical solutions provided in the disclosure may also be applied to future communication systems, such as a 6th generation mobile communication system and so on.

The terminal in the embodiments of the disclosure may also be referred to as a user equipment (UE), an access terminal, a subscriber unit, a subscriber station, a mobile site, a mobile station (MS), a mobile terminal (MT), a remote station, a remote terminal, a mobile device, a user terminal, a terminal device, a wireless communication device, a user agent or a user device. The terminal in the embodiments of the disclosure may be a device that provides voice and/or data connectivity to a user, and may be used to connect people, objects and machines, such as household appliances, sensors, electronic tags with wireless connection functions. The terminal in the embodiments of the disclosure may be a wireless terminal in a smart home, a wireless terminal in an industrial wireless sensor network (IWSN), wireless terminals in smart logistics and smart warehousing, a wireless terminal in self driving, a wireless terminal in a remote medical surgery, a wireless terminal in a smart grid, a wireless terminal in transportation safety, a wireless terminal in a smart city, or the like.

The network device in the embodiments of the disclosure may be a device for communicating with the terminal device. When the terminal is an electronic tag, the network device may be a reader/writer for reading from and writing to the electronic tag (for example, a reader/writer based on radio frequency identification (RFID) technology). The network device may also be an access network device or a wireless access network device. For example, the network device may be a base station. The network device in the embodiments of the disclosure may be a radio access network (RAN) node (or device) that accesses the terminal device to a wireless network. The base station may broadly cover or be interchangeable with various names, such as a NodeB, an evolved NodeB (eNB), a next generation NodeB (gNB), a relay station, an access point, a transmitting and receiving point (TRP), a transmitting point (TP), a primary station MeNB, a secondary station SeNB, an multi-standard radio (MSR) node, a home base station, a network controller, an access node, a wireless node, an access point (AP), a transmitting and receiving node, a transceiver node, a base band unit (BBU), a remote radio unit (RRU), an active antenna unit (AAU), a remote radio head (RRH), a central unit (CU), a distributed unit (DU), a positioning node, and the like. The base station may be a macro base station, a micro base station, a relay node, a donor node, or the like, or a combination thereof. The base station may also be a communication module, a modem, or a chip disposed within the aforementioned devices or apparatuses. The base station may also be a mobile switching center, a device that functions as a base station in device-to-device D2D, vehicle-to-everything (V2X), machine-to-machine (M2M) communications, a network-side device in a 6G network, a device that functions as a base station in a future communication system, or the like. The base station may support networks of the same or different access technologies. The specific technology and the specific equipment form employed by the network device are not limited in the embodiments of the disclosure.

The base station may be fixed or mobile. For example, a helicopter or drone may be configured to act as a mobile base station, and one or more cells may move based on the location of the mobile base station. In other examples, a helicopter or drone may be configured to act as a device that communicates with another base station.

In some deployments, the network device in the embodiments of the disclosure may be a CU or a DU, or the network device may include a CU and a DU. The gNB may also include an AAU.

The network device and the terminal device may be deployed on land, including indoor or outdoor, handheld or vehicle-mounted. The network device and the terminal device may also be deployed on the water. The network device and the terminal device may also be deployed on aircrafts, balloons and satellites in the air. The scenarios in which the network device and the terminal device are located are not limited in the embodiments of the disclosure.

It should be understood that all or part of the functions of the communication device in the disclosure may also be implemented by software functions running on hardware, or by virtualized functions instantiated on a platform (e.g., a cloud platform).

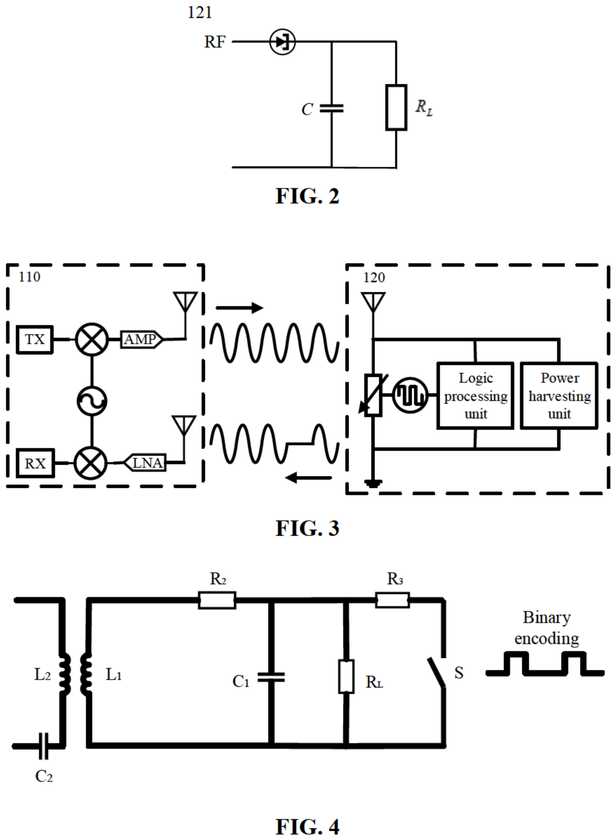

Hereinafter, to facilitate the understanding of the zero power communication technology, the terminals supporting zero power communication technology will be introduced with reference to FIG. 2.

Generally, the terminal 120 may include a power harvesting module 121 and a back scattering communication module 122. Hereinafter, the power harvesting module 121 and the back scattering communication module 122 will be introduced with reference to FIG. 2 to FIG. 4. For brevity, details will not be repeated herein again. In some cases, the terminal 120 may further include a low power computing module 123. The low power computing module 123 is configured to provide computing function for the terminal, such as data processing. In other cases, the terminal 120 may further include a sensor 124 for collecting external information (e.g., ambient temperature, ambient humidity). In other cases, the terminal 120 may further include a memory 125 for storing some information (e.g., external information collected by the above sensor, or article identifiers).

The aforementioned power harvesting module 121 is used for power harvesting. In some implementations, power harvesting may be achieved through the wireless power supply signal sent by the network device. The wireless power supply signal may be the "radio frequency signal" sent by the network device. Therefore, the aforementioned power harvesting module is also referred to as the "radio frequency power harvesting module".

FIG. 2 illustrates one possible structure of a power harvesting module. As illustrated in FIG. 2, the power harvesting module 121 may harvest the energy of the spatial electromagnetic wave of the radio frequency signal based on the principle of electromagnetic induction, and store the harvested energy in the capacitor C, which is a charging process of the capacitor C. After the charging process of the capacitor C is completed, the capacitor C may start discharging to supply power for the operation of the terminal. For example, the discharge of the capacitor C may be used to drive the terminal to perform low power demodulation on the data sent by the network device. For another example, the discharge of the capacitor C may be used to drive the terminal to modulate the data to be sent. For yet another example, the discharge of the capacitance C may be used to drive the sensor of the terminal for data collection. For still another example, the discharge of the capacitor C may be used to drive the terminal to read data in the memory 125.

The aforementioned back scattering communication module 122 is used for back scattering communication between the terminal and the network device. Hereinafter, the principle of back scattering communication according to an embodiment of the disclosure will be introduced with reference to FIG. 3. Referring to FIG. 3, the terminal 120 receives the wireless signal from the network device 110 and modulates the wireless signal to load data to be sent. Finally, the modulated signal is radiated via the antenna. This information transmission process is referred to as back scattering communication. The back scattering communication is inherently tied to load modulation function. It may be understood that the load modulation function achieves the modulation process by adjusting and controlling the circuit parameters of the oscillation loop of the terminal based on the data stream timing, thereby altering the parameters, such as magnitude of the impedance, of the terminal.

In some implementations, the transporting (TX) path of the network device 110 may also be provided with other devices for processing signals to be sent, such as an amplifier (AMP) or the like. The receiving (RX) path of the network device 110 may further be provided with other devices for processing the received signals, for example, a low noise amplifier (LNA) or the like.

In other implementations, the terminal 120 may be provided with a power harvesting unit for harvesting energy of the wireless power supply signal sent by the network device. Of course, the terminal 120 may further be provided with a logic processing unit to perform corresponding computational functions.

It is to be noted that, whether it is the network device 110 or the terminal 120, FIG. 3 exemplifies only the connection structure of the signal processing circuit. The processing circuits of network device 110 and/or terminal 120 may include other elements, which are not specifically limited in the embodiments of the disclosure.

Generally, the load modulation function may be realized by two methods: resistive load modulation and capacitive load modulation. FIG. 4 illustrates a circuit diagram of a terminal based on the resistive load modulation technology. It is to be noted that, the circuit illustrated in FIG. 4 implements the load modulation technology in a manner similar to the implementation of prior circuits implementing the load modulation technology. For brevity, the functions of the resistors R₂, R₃, capacitors C₁, C₂ and inductors L₁, L₂ included in the circuit illustrated in FIG. 4 will not be repeated again.

In the resistive load modulation, a resistor R_{L} may be connected in parallel to the load. The switch S may be controlled based on the binary data stream to turn the resistor RL on or off. In this way, the on-off state of the resistor R_{L} will cause changes in the circuit voltage, and the changes in the circuit voltage may control the amplitude of the back scattered signal of the terminal, thereby enabling modulation of the back scattered signal, that is, performing amplitude-shift keying (ASK) modulation of the back scattered signal.

Similarly, in the capacitive load modulation, frequency-shift keying (FSK) modulation may be achieved by controlling the on-off state of the capacitor based on the binary data stream to change the resonant frequency of the circuit and thus change the operating frequency of the back scattered signal.

As described above, the terminal may modulate the information of the incoming signal (i.e., the signal sent by the network device)) by means of the load modulation, thereby achieving the back scattering communication process. Therefore, terminals in the back scattering communication typically have the following advantages.

First advantage: since the terminal does not require active signal transmission, it eliminates the need for constructing complex radio frequency paths. For example, devices such as a power amplifier (PA) and an RF filter may not be provided in the radio frequency path to reduce the cost and volume of the terminal.

Second advantage: since the terminal does not need to actively generate high-frequency signals, it eliminates the need for a high-frequency crystal oscillator, thereby reducing the cost and volume of the terminal.

Third advantage: since the terminal may communicate with the network device by using backscatter technology, the terminal consumes relatively low energy during communication, and may even operate without consuming its own energy.

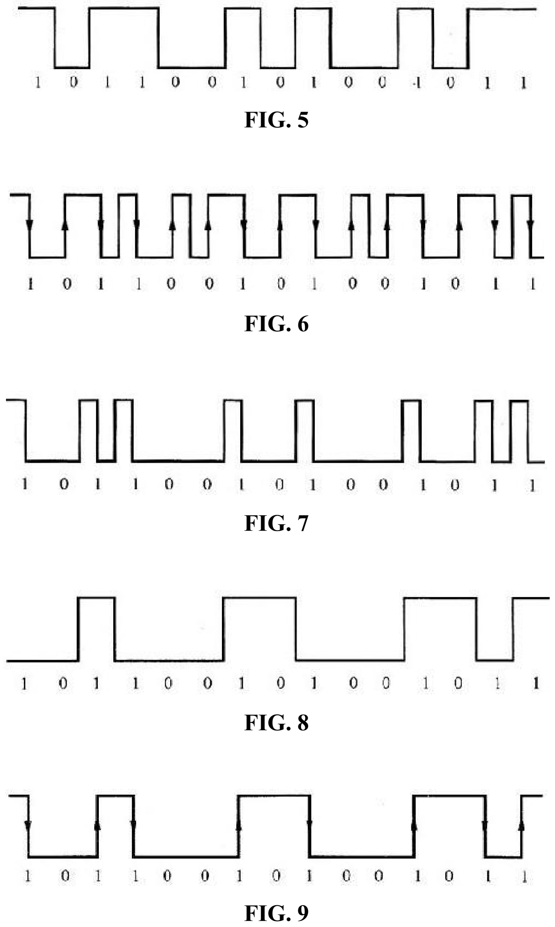

The communication process and the load modulation methods in the zero power communication technology are described above in combination with FIG. 1 to FIG. 4. Hereinafter, the encoding methods in the zero power communication technology will be introduced with reference to FIG. 5 to FIG. 9.

The data transmitted by the encoding end (such as a terminal or an electronic tag) may represent binary "1" and "0" using different encoding methods. Accordingly, the decoding end (e.g., a network device or a radio frequency identification system) may use a corresponding decoding method to decode the code stream sent by the encoding end. Commonly used encoding methods in the zero power communication technology include: non return zero (NRZ) encoding, Manchester encoding, unipolar RZ encoding, differential binary phase (DBP) encoding, Miller encoding, differential encoding, etc.

FIG. 5 is a schematic diagram of an encoding method of NRZ encoding. Referring to FIG. 5, in the NRZ encoding, a high level represents binary "1", while a low level represents binary "0".

FIG. 6 is a schematic diagram of an encoding method of Manchester encoding. The Manchester coding is also known as split-phase coding. Referring to FIG. 6, in the Manchester encoding, the value of a bit is indicated by the change in level (up or down) at half bit period within the bit length. The negative jump at half a bit period indicates binary "1", while the positive jump at half a bit period indicates binary "0". In some implementations, the Manchester encoding is usually used for data transmission from the electronic tag to the reader/writer, because it is conducive to find errors in data transmission. This is because within the bit length, the state of "no change" is not allowed. When the data bits simultaneously sent by multiple electronic tags have different values, the received rising edge and falling edge cancel each other out, resulting in an uninterrupted carrier signal throughout the entire bit length. Since this state is not allowed, the reader/writer may determine, based on this error, the specific location where the collision occurs.

FIG. 7 is a schematic diagram of an encoding method of unipolar RZ encoding. Referring to FIG. 7, in the unipolar RZ encoding, the high level within a first half a bit period represents binary "1", while the low level signal lasting for the entire bit period represents binary "0". In some implementations, the unipolar RZ encoding may be used to extract bit synchronization signals.

FIG. 8 is a schematic diagram of an encoding method of DBP encoding. Referring to FIG. 8, in the DBP coding, an arbitrary edge within half a bit period represents binary "0", while no edge represents binary "1". Furthermore, at the beginning of each bit period, the level is inverted. Therefore, for a receiver, the bit timing is relatively easy to reconstruct.

FIG. 9 is a schematic diagram of an encoding method of Miller encoding. Referring to FIG. 9, in the Miller coding, an arbitrary edge within half a bit period indicates binary "0", while an unchanged level through the next bit period indicates binary "0". A level alternation occurs at the beginning of the bit period. Therefore, for a receiver, the bit timing is relatively easy to reconstruct.

In addition, there is a differential encoding method. In the differential encoding, each binary "1" to be transmitted causes a change in signal level, while for binary "0", the signal level remains the same.

Based on the above introduction to the zero power communication technology, it can be seen that the zero power terminal consumes minimal, or even negligible, amounts of its own energy during communication. In the zero power communication technology, the terminals may be classified into three categories based on their energy sources and abilities to store energy (i.e. energy storage capabilities): device A, device B and device C.

The device A does not have an energy storage function. The device A does not have independent signal generation function and signal amplification function. The device A can only rely on back scattering for signal transportation.

The device B has an energy storage function, and the stored energy may be used to amplify the reflected signal. However, the device B cannot independently generate signals, and can only send signals using back scattering.

The device C also has an energy storage function. The device C can independently generate signals, that is, the device C can actively send signals.

Therefore, it can be seen that with the development of technology, changes have been taken place in the energy supply conditions of terminal devices. For example, one potential challenge that terminal devices may face is limited energy supply. Taking the zero power terminal as an example, the zero power terminal must harvest a certain amount of energy before it can drive itself to operate. In other words, the data transmission process of the zero power terminal device relies on external energy supply (such as wireless energy supply from the network). Before obtaining energy, the zero power terminal is in a "shutdown" state, that is, the zero power terminal is unable to receive signals sent from the peer end. Therefore, in some cases, data transmission is not only related to communication requirements and resource scheduling, but also to one or more factors such as the stability and/or availability of wireless power supply, the energy storage status of the terminal device, and the energy storage capacity of the terminal device.

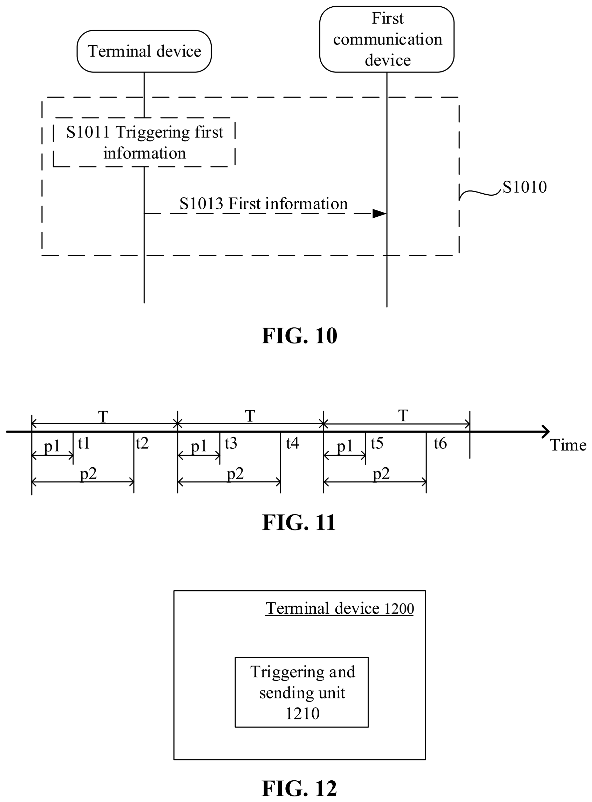

FIG. 10 is a method for wireless communication according to an embodiment of the disclosure used to solve the above problems. The method illustrated in FIG. 10 includes operation S1010. The operation S1010 may include operation S1011 and/or operation S1013.

In operation S1011, a terminal device triggers first information. In operation S1013, the terminal device sends the first information to a first communication device.

In case that the terminal device triggers the first information, the terminal device is able to send the first information. That is to say, the terminal device may or may not send the first information. Whether to send the first information may depend on when the terminal device can acquire transmission resources that carry the first information. For example, after the first information is triggered and the terminal device acquires transmission resources that carry the first information, the terminal device may send the first information.

The first information indicates the energy storage status of the terminal device. In other words, the first information may be related to energy stored in the terminal device. For example, the first information may be related to energy that the terminal device is capable of storing, i.e., to the energy storage capacity. Alternatively, the first information may be related to energy stored in the terminal device at a certain moment or within a certain period of time, i.e., to the energy storage status.

Based on the first information, when allocating and scheduling resources, the energy storage status of the terminal device can be taken into consideration, thereby enabling wireless power supply to satisfy the stability and reliability requirements of data transmission. Moreover, the disclosure can also achieve on-demand wireless power supply, thus minimizing the resource overhead for peer side wireless power supply as much as possible. Furthermore, from the perspective of resource management, based on the disclosure, a good and efficient cooperation between the energy supply process and the data transmission process can be realized, thereby realizing data transmission in scenarios such as zero power communication.

It is to be noted that, the terminal device in FIG. 10 may be the zero power terminal as described above. In case that the terminal device is a zero power terminal, the first communication device may supply power for the zero power terminal. Therefore, the first communication device may also be referred to as an external power supply device of the terminal device. The first communication device in FIG. 10 may be a network device. In this case, the terminal device may transmit the first information through uplink. Alternatively, the first communication device may be a third-party device other than a base station. Alternatively, the terminal device in FIG. 10 may be a first terminal device, and the first communication device may be a second terminal device adjacent to the first terminal device. The first terminal device may transmit the first information to the second terminal device through sidelink.

In some embodiments, the energy storage status of the terminal device may include one or more of: energy storage capacity information of the terminal device, or energy storage status information of the terminal device. Hereinafter, each of them will be described.

The energy storage capability information may indicate the energy storage-related capability of the terminal device. It is to be understood that, the energy storage capacity is relatively static information, that is, this information is an attribute of the terminal device. That is to say, the energy storage capacity information does not change over a long period of time.

As one possible implementation, the energy storage capability information may include one or more of: whether the terminal device has energy storage capacity, or an energy value that the terminal device is capable of storing.

As mentioned above, some terminal device have energy storage capabilities (such as device B or device C), while some terminal device do not have energy storage capabilities (such as device A). Based on this, the first information may indicate that the terminal device has the energy storage capability or the terminal device does not have the energy storage capability.

In case that the terminal device has the energy storage capability, the energy values that different terminal devices are capable of storing also vary. Accordingly, the first information may indicate the energy value that the terminal device is capable of storing. The energy value that the terminal device is capable of storing may be, for example, the maximum storable energy supported by the terminal device. The energy provided by the external energy supply device to the terminal device may not exceed the energy value that the terminal device is capable of storing, thereby avoiding the waste of resource overhead caused by excessive energy supply when data transmission is realized.

In some embodiments, the terminal device may trigger or send the first information to the first communication device in case that the terminal device has not indicated the energy storage capability information to the first communication device. If the terminal device has previously indicated the energy storage capability information to the first communication device, the terminal device may not trigger or send the first information to the first communication device. From the above, it can be seen that the energy storage capacity information may remain unchanged for a period of time. Therefore, according to the present embodiment, it is possible to avoid repeated reporting of the energy storage capacity information, thereby avoiding unnecessary communication overhead.

The energy storage status information may indicate the energy storage-related status of the terminal device. It is to be understood that, the energy storage status information is relatively dynamic information, that is, the energy storage status can be variable. Based on the energy storage status information, the first communication device may determine the data amount and/or the transmission time duration of the current data transmission, and may further adjust the resource allocation and scheduling, to realize stable and reliable data transmission.

In some embodiments, the energy storage status information may include first energy stored in the terminal device.

Optionally, the first energy may include energy currently stored in the terminal device. For example, when the terminal device triggers the first information, the term "currently" may refer to a time at which the first information is triggered. When the terminal device sends the first information, the term "currently" may refer to a time at which the first information is sent. When the terminal device determines whether to trigger or send the first information, the term "currently" may refer to a time of making such determination. As a possible implementation, when the terminal device triggers the first information at time T1 and waits until time T2 at which transmission resources become available for sending the first information, the first energy contained in the first information sent by terminal device may be energy stored in the terminal device at the time T2.

Optionally, the first energy may include one or more of: energy stored in the terminal device when the first information is triggered, energy stored in the terminal device when the first information is transmitted, or the like. Taking the first energy includes the energy stored in the terminal device when the first information is triggered as an example, when the terminal device triggers the first information at time T1 and waits until time T2 at which transmission resources become available for sending the first information, the first energy contained in the first information sent by terminal device may be energy stored in the terminal device at the time T1.

Additionally, at the time when the first information was historically triggered or sent, the energy stored in the terminal device may be a second energy. For example, the second energy may include energy stored in the terminal device at the time when the first information was last triggered or sent.

In some embodiments, the energy storage status information may include a communication duration supportable by the first energy. The communication duration may be a continuous period of time. That is to say, the communication duration supportable by the first energy may include a continuous communication duration that the energy currently stored in the terminal device can provide.

In some embodiments, the energy storage status information may include an amount of data transmittable by the first energy. The amount of data that can be transmitted may be an amount of data that can be continuously transmitted. That is to say, the amount of data transmittable by the first energy may include the amount of data that the energy currently stored in the terminal device can provide for continuous communication.

In some embodiments, the timing for the terminal device to trigger and report the first information may include an initial access process of the terminal device. That is to say, the terminal device may trigger or send the first information during the initial access process.

As an implementation, whether the terminal device triggers or sends the first information during the initial access process may be indicated by first indication information. The first indication information may be sent by the first communication device to the terminal device. It is to be understood that, in case that the first communication device is a network device, whether the terminal device triggers or sends the first information during the initial access process is configured by the network device.

In some embodiments, the timing for the terminal device to report the first information may include a UE capability reporting process. That is to say, the terminal device may trigger or send the first information during the UE capability reporting process.

In some implementations, the first information may be reported explicitly. For example, the first information may be indicated by a first bit field of a first message. The first bit field may include a newly added bit field or an existing bit field.

The indication manner of the first bit field is not limited in the disclosure. Taking the first bit field includes a capability bit field indicating whether the terminal device has the energy storage capacity as an example, the capability bit field may be 0 or 1. In case that the capability bit field is 0, the first information may indicate that the terminal device has the energy storage capability, and in case that the capability bit field is 1, the first information may indicate that the terminal device does not have the energy storage capability. Alternatively, in case that the capability bit field is 1, the first information may indicate that the terminal device has the energy storage capability, and in case that the capability bit field is 0, the first information may indicate that the terminal device does not have the energy storage capability.

In some embodiments, the first bit field may indicate the first information by one of: a corresponding value, an interval in which the corresponding value is located, an index of the corresponding value, a difference between the corresponding value and a historical value, or the like. Taking the first information indicates the first energy of the terminal device as an example, the first energy is, for example, 50, the second energy reported last time is, for example, 60, then the value of the first bit field may be: a value 50 corresponding to the first energy, an index value of an interval [40, 60] corresponding to the value 50, or a difference value (50-60) between the first energy value and the second energy value.

The type of the first message carrying the first bit field is not limited in the disclosure. For example, the first message may include one or more of: a radio resource control (RRC) signaling, a medium access control control element (MAC CE), or uplink control information (UCI).

In some implementations, the first information may be reported implicitly. In some embodiments, the first information may be indicated by one or more of the following in the first message: resources used to transmit the first information, or a sequence corresponding to the first information.

In some embodiments, the first information may be determined by one or more of: a time-frequency resource pool (referred to as a resource pool for short) to which the resources used to transmit the first information belong, or a sequence set to which the sequence corresponding to the first information belongs. Examples are given below.

For example, the terminal device having the energy storage capability may use resources in the first resource pool, while the terminal device having no the energy storage capability may use resources in the second resource pool. The first communication device may determine whether the terminal device has the energy storage capability based on the resource pool to which the resources used by the terminal device belong. For another example, the terminal device having the energy storage capability may use a sequence in a first sequence set, while the terminal device having no the energy storage capability may use a sequence in a second sequence set. The first communication device may determine whether the terminal device has the energy storage capability based on the sequence set to which the sequence belongs.

For another example, the energy values that the terminal device is capable of storing may be classified into different energy storage capacity levels. Different energy storage capacity levels may correspond to different resource pools. The first communication device may determine the energy storage capacity level of the terminal device based on the resource pool to which the resources used by the terminal device belong. Different energy storage capacity levels may correspond to different sequence sets. The first communication device may determine the energy storage capacity level of the terminal device based on the sequence set to which the sequence belongs.

For another example, the energy storage statuses of the terminal device may be classified into different energy storage status levels. Different energy storage status levels may correspond to different resource pools. The first communication device may determine the energy storage status level of the terminal device based on the resource pool to which the resources used by the terminal device belong. Different energy storage status levels may correspond to different sequence sets. The first communication device may determine the energy storage status level of the terminal device based on the sequence set to which the sequence belongs.

It is to be noted that, multiple resource pools or multiple sequence sets may be configured by the network device or predefined.

The sending or triggering mechanism of the first information may include one or more of: periodical reporting, event triggered reporting, request-based reporting, or piggybacked reporting via data transmission. A detailed description will be given below.

In some embodiments, the terminal device may periodically trigger or send the first information. For example, the triggering or sending of the first information may be determined by a first period. For example, the sending or triggering interval of the first information may be the first period. Taking FIG. 11 as an example, the first period may be represented by T in FIG. 11. The terminal device may retrigger or resend the first information at a moment when the interval from the last triggering or sending of the first information is T.

In some embodiments, the triggering or sending time of the first information may be determined by a first offset. The first offset may be an offset time duration of the triggering or sending time of the first information with respect to the starting time of the first period. As illustrated in FIG. 11, the first offset may be p1, and the terminal device may periodically send or trigger the first information at time t1, time t3, and time t5.

The operation that the triggering or sending time of the first information is determined by the first offset enables the first information triggered or sent by different terminal devices to be separated in the time domain. Continuing to take FIG. 11 as an example, the first offset of the first terminal device may be p1, and the first offset of the third terminal device may be p2. As illustrated in FIG. 11, the first terminal device may trigger or send the first information at time t1, time t3, and time t5. The third terminal device may trigger or send the first information at time t2, time t4, and time t6. Therefore, it can be seen that even if the first period is the same, different terminal devices may send or trigger the first information at different times based on different first offsets.

It is to be noted that, the first period and/or the first offset may be: configured by a network device, determined by an identifier (ID) of the terminal device, or predefined. In case that the first period and/or the first offset is configured by the network device, the value of the first period and/or the value of the first offset may be configured by one or more of: broadcast, multicast, or terminal device-specific signaling. In case that the terminal device is a zero power terminal, the ID of the terminal device may be a tag ID. The first period and/or the first offset may be calculated based on the ID of terminal device and the calculation formula.

In some embodiments, in response to occurrence of a first event, the terminal device may trigger or send the first information.

For example, the first event may include that a difference between first energy stored in the terminal device and second energy stored in the terminal device is greater than or equal to a first threshold. The first energy stored in the terminal device is, for example, energy currently stored in the terminal device. The second energy stored in the terminal device is energy stored in the terminal device that is indicated by the first information sent or triggered by the terminal device last time. That is to say, the first event may include that the difference between the current stored energy of the terminal device and the stored energy that is most recently reported reaches or exceeds the first threshold.

For another example, the first event may include that first energy stored in the terminal device is less than or equal to a second threshold. In other words, the terminal device may send or trigger the first information in response to the current stored energy of the terminal device reaching or falling below the second threshold.

For another example, the first event may include that first energy stored in the terminal device is greater than or equal to a third threshold. In other words, the terminal device may send or trigger the first information in response to the current stored energy of the terminal device reaching or exceeding the third threshold.

For another example, the first event may include that the terminal device completes one or more energy harvesting processes. For example, the terminal device may trigger or send the first information after each completion of energy harvesting.

It is to be noted that, one or more of the first threshold, the second threshold or the third threshold may is configured by a network device or predefined. In case that one or more of the first threshold, the second threshold or the third threshold is configured by the network device, the configuration may be implemented by the network device through one or more of: broadcast signaling, multicast signaling, or terminal device-specific signaling.

In case that one or more of the first threshold, the second threshold or the third threshold is configured by the network device, the terminal device may trigger or send the first information once in response to the terminal device receiving the corresponding information configured by the network device. In case that one or more of the first threshold, the second threshold or the third threshold is preconfigured, the terminal device may trigger or send the first information once during the initial access process.

In some embodiments, in response to the terminal device receiving a first request from the first communication device, the terminal device may trigger or send the first information. The first request may be a reporting request for the first information. Taking the first information indicates the energy storage status information as an example, the first request may be an energy storage status reporting request of the terminal device.

In some embodiments, the first message carrying the first information may further be used to transmit data. In other words, the first information may be piggybacked during the process of transmitting the data. Alternatively, the data may be piggybacked during the process of transmitting the first information. For example, the terminal device may piggyback the first information each time it transmits data. Alternatively, in case that resources allocated to the first message remain after the first message has fully carried the data to be transmitted, the first information may be piggybacked in this transmission. It is to be understood that, the operation that the first information is transmitted by using the remaining resources in the first message enables efficient utilization of transmission resources, thereby avoiding waste of resources.

The method embodiments of the disclosure are described in detail above. The apparatus embodiments of the disclosure will be described in detail below. It should be understood that the description of the method embodiments corresponds to the description of the apparatus embodiments. Therefore, for sections not described in detail, reference may be made to the preceding method embodiments.

FIG. 12 is a schematic structural diagram of a terminal device 1200 according to an embodiment of the disclosure. The terminal device 1200 may include a triggering and sending unit 1210.

The triggering and sending unit may be configured to trigger or send first information. The first information indicates energy storage status of the terminal device.

In some embodiments, the energy storage status of the terminal device includes one or more of: energy storage capacity information of the terminal device, or energy storage status information of the terminal device.

In some embodiments, the energy storage capability information includes one or more of: whether the terminal device has energy storage capacity, or an energy value that the terminal device is capable of storing.

In some embodiments, the energy storage status information includes one or more of: first energy stored in the terminal device, a communication duration supportable by the first energy, or an amount of data transmittable by the first energy.

In some embodiments, the first energy is energy currently stored in the terminal device.

In some embodiments, the triggering and sending unit 1210 is specifically configured to trigger or send the first information during an initial access process of the terminal device.

In some embodiments, the terminal device 1200 is further configured to receive first indication information. The first indication information indicates whether the terminal device triggers or sends the first information during the initial access process.

In some embodiments, the triggering and sending unit 1210 is specifically configured to trigger or send the first information during a UE capability reporting process.

In some embodiments, the first information is indicated by a first bit field of a first message.

In some embodiments, the first information is indicated by one or more of the following in the first message: resources used to transmit the first information, or a sequence corresponding to the first information.

In some embodiments, the triggering and sending unit 1210 is specifically configured to periodically trigger or send the first information.

In some embodiments, a triggering or sending time of the first information is determined by a first period and a first offset.

In some embodiments, the first period and/or the first offset is: configured by a network device, determined by an identifier (ID) of the terminal device, or predefined.

In some embodiments, the triggering and sending unit 1210 is specifically configured to, in response to occurrence of a first event, trigger or send the first information.

In some embodiments, the first event includes one or more of: a difference between first energy stored in the terminal device and second energy stored in the terminal device is greater than or equal to a first threshold, first energy stored in the terminal device is less than or equal to a second threshold, first energy stored in the terminal device is greater than or equal to a third threshold, or the terminal device completes one or more energy harvesting processes.

In some embodiments, the second energy stored in the terminal device is energy stored in the terminal device that is indicated by the first information sent by the terminal device last time.

In some embodiments, the triggering and sending unit 1210 is specifically configured to trigger or send the first information in response to the terminal device receiving a first request.

In some embodiments, the first message carrying the first information is further used to transmit data.

In some embodiments, in case that resources allocated to the first message remain after the first message has fully carried the data to be transmitted, the first information is carried in the first message.

In some embodiments, the terminal device is a zero power terminal device.

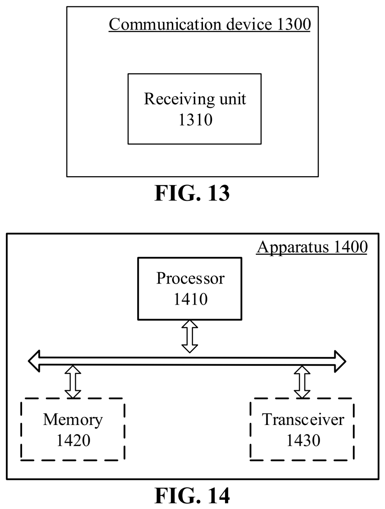

FIG. 13 is a schematic structural illustration of a communication device 1300 according to an embodiment of the disclosure. The communication device 1300 is a first communication device. The communication device 1300 includes a receiving unit 1310.

The receiving unit 1310 is configured to receive first information from a terminal device. The first information indicates energy storage status of the terminal device.

In some embodiments, the energy storage status of the terminal device includes one or more of: energy storage capacity information of the terminal device, or energy storage status information of the terminal device.

In some embodiments, the energy storage capability information includes one or more of: whether the terminal device has energy storage capacity, or an energy value that the terminal device is capable of storing.

In some embodiments, the energy storage status information includes one or more of: first energy stored in the terminal device, a communication duration supportable by the first energy, or an amount of data transmittable by the first energy.

In some embodiments, the first energy is energy currently stored in the terminal device.

In some embodiments, the receiving unit 1310 is specifically configured to receive the first information during an initial access process of the terminal device.

In some embodiments, the communication device 1300 is further configured to send first indication information to the terminal device. The first indication information indicates whether the terminal device triggers or sends the first information during the initial access process.

In some embodiments, the receiving unit 1310 is specifically configured to receive the first information during a UE capability reporting process.

In some embodiments, the first information is indicated by a first bit field of a first message.

In some embodiments, the first information is indicated by one or more of the following in the first message: resources used to transmit the first information, or a sequence corresponding to the first information.

In some embodiments, the receiving unit 1310 is specifically configured to periodically receive the first information from the terminal device.

In some embodiments, a triggering or receiving time of the first information is determined by a first period and a first offset.

In some embodiments, the first period and/or the first offset is: configured by a network device, determined by an identifier (ID) of the terminal device, or predefined.

In some embodiments, the receiving unit 1310 is specifically configured to receive the first information in response to occurrence of a first event.

In some embodiments, the first event includes one or more of: a difference between first energy stored in the terminal device and second energy stored in the terminal device is greater than or equal to a first threshold, first energy stored in the terminal device is less than or equal to a second threshold, first energy stored in the terminal device is greater than or equal to a third threshold, or the terminal device completes one or more energy harvesting processes.

In some embodiments, the second energy stored in the terminal device is reported by the terminal device last time.

In some embodiments, the receiving unit 1310 is specifically configured to receive the first information in response to the first communication device sending a first request.

In some embodiments, the first message carrying the first information is further used to transmit data.

In some embodiments, in case that resources allocated to the first message remain after the first message has fully carried the data to be transmitted, the first information is carried in the first message.

In some embodiments, the terminal device is a zero power terminal device.

In an optional embodiment, the triggering and sending unit 1210 or the receiving unit 1310 may be a transceiver 1430. The terminal device 1200 or the communication device 1300 may further include a processor 1410 and/or a memory 1420, as specifically illustrated in FIG. 18.

FIG. 14 is a schematic structural diagram of an apparatus for communication according to an embodiment of the disclosure. The dotted line in FIG. 14 indicates that the unit or module is optional. The apparatus 1400 may be used to implement any of the methods described in the above method embodiments. The apparatus 1400 may be a chip, a terminal device, or a network device.

The apparatus 1400 may include one or more processors 1410. The processor 1410 is configured to enable the apparatus 1400 to implement any of the methods described in the above method embodiments. The processor 1410 may be a general-purpose processor or a special-purpose processor. For example, the processor may be a central processing unit (CPU). Alternatively, the processor may be another general-purpose processor, a digital signal processor (DSP), an application specific integrated circuit (ASIC), a field programmable gate array (FPGA) or another programmable logic device, a discrete gate or transistor logic device, or a discrete hardware component. The general-purpose processor may be a microprocessor, or may be any conventional processor or the like.

The apparatus 1400 may further include one or more memories 1420. The memory 1420 has stored thereon a program that may be executed by the processor 1410 to cause the processor 1410 to perform any of the methods described in the above method embodiments. The memory 1420 may be independent of the processor 1410, or may be integrated in the processor 1410.

The device 1400 may further include a transceiver 1430. The processor 1410 may communicate with other devices or chips through the transceiver 1430. For example, the processor 1410 may transmit data to or receive data from other devices or chips through the transceiver 1430.

In the embodiment of the disclosure, a computer-readable storage medium for storing a program is further provided. The computer-readable storage medium may be applied to the terminal device or the network device according to embodiments of the disclosure, and the program causes the computer to perform the method performed by the terminal device or the network device in each of the embodiments of the disclosure.

In the embodiment of the disclosure, a computer program product is further provided. The computer program product includes a program. The computer program product may be applied to the terminal device or the network device according to an embodiment of the disclosure, and the program causes the computer to perform the method performed by the terminal device or the network device in each of the embodiments of the disclosure.

In the embodiment of the disclosure, a computer program is further provided. The computer program may be applied to the terminal device or the network device according to an embodiment of the disclosure, and the computer program causes the computer to perform the method performed by the terminal device or the network device in each of the embodiments of the disclosure.

It should be understood that the terms "system" and "network" may be used interchangeably in the disclosure. In addition, the terms used in the disclosure are only for the purpose of explanation of specific embodiments in the disclosure, and are not intended to limit the disclosure. The terms "first", "second", "third", and "fourth" and the like in the description, the claims and the drawings of the disclosure are used to distinguish different objects, but not used to describe a particular order. Furthermore, the terms "comprise" and "have" and any variations thereof are intended to cover non-exclusive inclusions.

In the embodiments of the disclosure, the mentioned term "indicate/indication" may be a direct indication, or may be an indirect indication, or may represent that there is an association relationship. For example, A indicates B, which may represent that A indicates B directly, for example, B may be acquired through A; or, it may represent A indicate B indirectly, for example, A indicates C, and B may be acquired through C; or it may represent that there is an association relationship between A and B.

In the embodiments of the disclosure, "B corresponding to A" represents that B is associated with A, and B may be determined based on A. However, it should also be understood that, "B is determined based on A" does not mean that B is determined merely based on A, but that B may also be determined based on A and/or other information.

In the embodiments of the disclosure, the term "correspond/correspondence" may represent that there is a direct or indirect correspondence between the two objects; or, it may represent that there is an association relationship between two objects; or, it may be a relationship such as indicating and being indicated, configuring and being configured, etc.

In the embodiments of the disclosure, "predefined" or "preconfigured" may be implemented by storing in advance corresponding codes, tables, or other means which may be used to indicate relevant information in a device (including, for example, a terminal device and a network device), the specific implementation thereof is not limited in the disclosure. For example, "predefined" may be "defined in a protocol".

In the embodiments of the disclosure, the "protocol" may be a standard protocol in the field of communications, and for example, it may include an LTE protocol, an NR protocol, and relevant protocols applied to future communication systems, which are not limited in the disclosure.

In the embodiments of the disclosure, the term "and/or" merely indicates an association relationship for describing associated objects, and represents that there are three kinds of relationships. For example, "A and/or B" may represent three situations, i.e., independent existence of A, existence of both A and B, and independent existence of B. In addition, in this context, the character "/" generally indicates that the anterior and posterior associated objects are in a kind of "or" relationship.

In the embodiments of the disclosure, the term "include" may refer to directly including or indirectly including. Optionally, the reference to "include" in the embodiments of the disclosure may be replaced with "indicate" or "used to determine". For example, "A includes B", may be replaced with "A indicates B", or "A is used to determine B".

In various embodiments of the disclosure, the values of the sequence numbers of the aforementioned processes do not imply the execution sequence. The execution sequence of the processes should be determined based on functions thereof and inherent logics, and the values of the sequence numbers should not constitute any limitation on the implementation processes of the embodiments of the disclosure.

In several embodiments provided in the disclosure, it is to be understood that the disclosed systems, devices, and methods may be implemented in other ways. For example, the device embodiments described above are only schematic. For example, the partition of the unit is only a kind of logical functional partition, and other partition manners may be adopted during practical implementation. For example, multiple units or components may be combined or integrated into another system, or some features may be omitted or not implemented. In addition, coupling or direct coupling or communication connection between various displayed or discussed components may be indirect coupling or communication connection implemented through some interfaces, devices or units, and may be an electrical or mechanical connection or in other forms.

The units described as separate components may or may not be physically separate, and the components displayed as units may or may not be physical units, that is, they may be located in one place or may be distributed to multiple network units. Part or all of the units may be selected based on the actual needs to achieve the purpose of the solution of the present embodiment.

In addition, various functional units in the embodiments of the disclosure may be integrated into one processing unit, or they may be physically exist separately as individual units, or two or more units may be integrated into one unit.

In the embodiments described above, it may be implemented in whole or in part by software, hardware, firmware, or any combination thereof. When implemented by using software, it may be implemented in whole or in part in the form of a computer program product. The computer program product includes one or more computer instructions. When the computer program instructions are loaded and executed on a computer, processes or functions in the embodiments of the disclosure are generated in whole or in part. The computer may be a general-purpose computer, a dedicated computer, a computer network, or other programmable devices. The computer instructions may be stored in a computer readable storage medium, or may be transmitted from one computer readable storage medium to another computer readable storage medium. For example, the computer instructions may be transmitted from one website, computer, server, or data center to another website, computer, server, or data center in a wired (e.g. coaxial cable, fiber optic, digital subscriber line (DSL)) or wireless (e.g. infrared, wireless, microwave, etc.) way. The computer-readable storage medium may be any available medium accessible by a computer or a data storage device containing a server, a data center and the like integrated by one or more available media. The available medium may be a magnetic medium (e.g., a floppy disk, a hard disk, a magnetic tape), an optical medium (e.g., a digital video disc (DVD)), or a semiconductor medium (e.g., a solid state disk (SSD)), etc.

The above description is only the specific implementations of the disclosure. However, the scope of protection of the disclosure is not limited thereto. Variations or replacements which can be readily conceived by those skilled in the art within the technical scope disclosed by the disclosure shall fall within the scope of protection of the disclosure. Therefore, the scope of protection of the disclosure shall be determined by the scope of protection of the claims.

## Claims

1. A method for wireless communication, comprising:
triggering or sending, by a terminal device, first information,
wherein the first information indicates energy storage status of the terminal device.

2. The method of claim 1, wherein the energy storage status of the terminal device comprises one or more of:
energy storage capacity information of the terminal device; or
energy storage status information of the terminal device.

3. The method of claim 2, wherein the energy storage capacity information comprises one or more of:
whether the terminal device has energy storage capacity; or
an energy value that the terminal device is capable of storing.

4. The method of claim 2 or 3, wherein the energy storage status information comprises one or more of:
first energy stored in the terminal device;
a communication duration supportable by the first energy; or
an amount of data transmittable by the first energy.

5. The method of claim 4, wherein the first energy is energy currently stored in the terminal device.

6. The method of any one of claims 1 to 5, wherein triggering or sending, by the terminal device, the first information comprises:
triggering or sending, by the terminal device, the first information during an initial access process of the terminal device.

7. The method of claim 6, further comprising:
receiving, by the terminal device, first indication information,
wherein the first indication information indicates whether the terminal device triggers or sends the first information during the initial access process.

8. The method of any one of claims 1 to 7, wherein triggering or sending, by the terminal device, the first information comprises:
triggering or sending, by the terminal device, the first information during a UE capability reporting process.

9. The method of any one of claims 1 to 8, wherein the first information is indicated by a first bit field of a first message.

10. The method of any one of claim 1 to 8, wherein the first information is indicated by one or more of the following in a first message:
resources used to transmit the first information; or
a sequence corresponding to the first information.

11. The method of any one of claims 1 to 10, wherein sending, by the terminal device, the first information comprises:
periodically triggering or sending, by the terminal device, the first information.

12. The method of claim 11, wherein a triggering or sending time of the first information is determined by a first period and a first offset.

13. The method of claim 11 or 12, wherein it is determined that the first period and/or the first offset is:
configured by a network device;
determined by an identifier of the terminal device; or
predefined.

14. The method of any one of claims 1 to 13, wherein triggering or sending, by the terminal device, the first information comprises:
in response to occurrence of a first event, triggering or sending, by the terminal device, the first information.

15. The method of claim 14, wherein the first event comprises one or more of:
a difference between first energy stored in the terminal device and second energy stored in the terminal device is greater than or equal to a first threshold;
first energy stored in the terminal device is less than or equal to a second threshold;
first energy stored in the terminal device is greater than or equal to a third threshold; or
the terminal device completes one or more energy harvesting processes.

16. The method of claim 15, wherein the second energy stored in the terminal device is indicated by the first information sent by the terminal device last time.

17. The method of any one of claims 1 to 16, wherein triggering or sending, by the terminal device, the first information comprises:
in response to the terminal device receiving a first request, triggering or sending, by the terminal device, the first information.

18. The method of any one of claims 1 to 17, wherein the first message carrying the first information further transmits data.

19. The method of claim 18, wherein in case that resources allocated to the first message remain after the first message has fully carried the data to be transmitted, the first information is carried in the first message.

20. The method of any one of claims 1 to 19, wherein the terminal device is a zero power terminal device.

21. A method for wireless communication, comprising:
receiving, by a first communication device, first information from a terminal device,
wherein the first information indicates energy storage status of the terminal device.

22. The method of claim 21, wherein the energy storage status of the terminal device comprises one or more of:
energy storage capacity information of the terminal device; or
energy storage status information of the terminal device.

23. The method of claim 22, wherein the energy storage capacity information comprises one or more of:
whether the terminal device has energy storage capacity; or
an energy value that the terminal device is capable of storing.

24. The method of claim 22 or 23, wherein the energy storage status information comprises one or more of:
first energy stored in the terminal device;
a communication duration supportable by the first energy; or
an amount of data transmittable by the first energy.

25. The method of claim 24, wherein the first energy is energy currently stored in the terminal device.

26. The method of any one of claims 21 to 25, wherein receiving, by the first communication device, the first information from the terminal device comprises:
receiving, by the first communication device, the first information during an initial access process of the terminal device.

27. The method of claim 26, further comprising:
sending, by the first communication device, first indication information to the terminal device,
wherein the first indication information indicates whether the terminal device triggers or sends the first information during the initial access process.

28. The method of any one of claims 21 to 27, wherein receiving, by the first communication device, the first information from the terminal device comprises:
receiving, by the first communication device, the first information during a UE capability reporting process.

29. The method of any one of claims 21 to 28, wherein the first information is indicated by a first bit field of a first message.

30. The method of any one of claim 21 to 28, wherein the first information is indicated by one or more of the following in a first message:
resources used to transmit the first information; or
a sequence corresponding to the first information.

31. The method of any one of claims 21 to 30, wherein receiving, by the first communication device, the first information from the terminal device comprises:
periodically receiving, by the first communication device, the first information from the terminal device.

32. The method of claim 31, wherein a triggering or receiving time of the first information is determined by a first period and a first offset.

33. The method of claim 31 or 32, wherein the first period or the first offset is:
configured by a network device;
determined by an identifier of the terminal device; or
predefined.

34. The method of any one of claims 21 to 33, wherein receiving, by the first communication device, the first information from the terminal device comprises:
in response to occurrence of a first event, receiving, by the first communication device, the first information.

35. The method of claim 34, wherein the first event comprises one or more of:
a difference between first energy stored in the terminal device and second energy stored in the terminal device is greater than or equal to a first threshold;
first energy stored in the terminal device is less than or equal to a second threshold;
first energy stored in the terminal device is greater than or equal to a third threshold; or
the terminal device completes one or more energy harvesting processes.

36. The method of claim 35, wherein the second energy stored in the terminal device is reported by the terminal device last time.

37. The method of any one of claims 21 to 36, wherein receiving, by the first communication device, the first information from the terminal device comprises:
in response to the first communication device sending a first request, receiving, by the first communication device, the first information from the terminal device.

38. The method of any one of claims 21 to 37, wherein the first message carrying the first information further transmits data.

39. The method of claim 38, wherein in case that resources allocated to the first message remain after the first message has fully carried the data to be transmitted, the first information is carried in the first message.

40. The method of any one of claims 21 to 39, wherein the terminal device is a zero power terminal device.

41. A terminal device, comprising:
a triggering and sending unit, configured to trigger or send first information,
wherein the first information indicates energy storage status of the terminal device.

42. The terminal device of claim 41, wherein the energy storage status of the terminal device comprises one or more of:
energy storage capacity information of the terminal device; or
energy storage status information of the terminal device.

43. The terminal device of claim 42, wherein the energy storage capacity information comprises one or more of:
whether the terminal device has energy storage capacity; or
an energy value that the terminal device is capable of storing.

44. The terminal device of claim 42 or 43, wherein the energy storage status information comprises one or more of:
first energy stored in the terminal device;
a communication duration supportable by the first energy; or
an amount of data transmittable by the first energy.

45. The terminal device of claim 44, wherein the first energy is energy currently stored in the terminal device.

46. The terminal device of any one of claims 41 to 45, wherein the triggering and sending unit is specifically configured to:
trigger or send the first information during an initial access process of the terminal device.

47. The terminal device of claim 46, wherein the terminal device is further configured to:
receive first indication information,
wherein the first indication information indicates whether the terminal device triggers or sends the first information during the initial access process.

48. The terminal device of any one of claims 41 to 47, wherein the triggering and sending unit is specifically configured to:
trigger or send the first information during a UE capability reporting process.

49. The terminal device of any one of claims 41 to 48, wherein the first information is indicated by a first bit field of a first message.

50. The terminal device of any one of claims 41 to 48, wherein the first information is indicated by one or more of the following in a first message:
resources used to transmit the first information; or
a sequence corresponding to the first information.

51. The terminal device of any one of claims 41 to 50, wherein the triggering and sending unit is specifically configured to:
periodically trigger or send the first information.

52. The terminal device of claim 51, wherein a triggering or sending time of the first information is determined by a first period and a first offset.

53. The terminal device of claim 51 or 52, wherein it is determined that the first period or the first offset is:
configured by a network device;
determined by an identifier of the terminal device; or
predefined.

54. The terminal device of any one of claims 41 to 53, wherein the triggering and sending unit is specifically configured to:
in response to occurrence of a first event, trigger or send the first information.

55. The terminal device of claim 54, wherein the first event comprises one or more of:
a difference between first energy stored in the terminal device and second energy stored in the terminal device is greater than or equal to a first threshold;
first energy stored in the terminal device is less than or equal to a second threshold;
first energy stored in the terminal device is greater than or equal to a third threshold; or
the terminal device completes one or more energy harvesting processes.

56. The terminal device of claim 55, wherein the second energy stored in the terminal device is indicated by the first information sent by the terminal device last time.

57. The terminal device of any one of claims 41 to 56, wherein the triggering and sending unit is specifically configured to:
in response to the terminal device receiving a first request, trigger or send the first information.

58. The terminal device of any one of claims 41 to 57, wherein the first message carrying the first information further transmits data.

59. The terminal device of claim 58, wherein in case that resources allocated to the first message remain after the first message has fully carried the data to be transmitted, the first information is carried in the first message.

60. The terminal device of any one of claims 41 to 59, wherein the terminal device is a zero power terminal device.

61. A communication device, wherein the communication device is a first communication device, and comprises:
a receiving unit, configured to receive first information from a terminal device,
wherein the first information indicates energy storage status of the terminal device.

62. The communication device of claim 61, wherein the energy storage status of the terminal device comprises one or more of:
energy storage capacity information of the terminal device; or
energy storage status information of the terminal device.

63. The communication device of claim 62, wherein the energy storage capacity information comprises one or more of:
whether the terminal device has energy storage capacity; or
an energy value that the terminal device is capable of storing.

64. The communication device of claim 62 or 63, wherein the energy storage status information comprises one or more of:
first energy stored in the terminal device;
a communication duration supportable by the first energy; or
an amount of data transmittable by the first energy.

65. The communication device of claim 64, wherein the first energy is energy currently stored in the terminal device.

66. The communication device of any one of claims 61 to 65, wherein the receiving unit is specifically configured to:
receive the first information during an initial access process of the terminal device.

67. The communication device of claim 66, wherein the communication device is further configured to:
send first indication information to the terminal device,
wherein the first indication information indicates whether the terminal device triggers or sends the first information during the initial access process.

68. The communication device of any one of claims 61 to 67, wherein the receiving unit is specifically configured to:
receive the first information during a UE capability reporting process.

69. The communication device of any one of claims 61 to 68, wherein the first information is indicated by a first bit field of a first message.

70. The communication device of any one of claims 61 to 68, wherein the first information is indicated by one or more of the following in a first message:
resources used to transmit the first information; or
a sequence corresponding to the first information.

71. The communication device of any one of claims 61 to 70, wherein the receiving unit is specifically configured to:
periodically receive the first information from the terminal device.

72. The communication device of claim 71, wherein a triggering or receiving time of the first information is determined by a first period and a first offset.

73. The communication device of claim 71 or 72, wherein the first period or the first offset is:
configured by a network device;
determined by an identifier of the terminal device; or
predefined.

74. The communication device of any one of claims 61 to 73, wherein the receiving unit is specifically configured to:
in response to occurrence of a first event, receive the first information.

75. The communication device of claim 74, wherein the first event comprises one or more of:
a difference between first energy stored in the terminal device and second energy stored in the terminal device is greater than or equal to a first threshold;
first energy stored in the terminal device is less than or equal to a second threshold;
first energy stored in the terminal device is greater than or equal to a third threshold; or
the terminal device completes one or more energy harvesting processes.

76. The communication device of claim 75, wherein the second energy stored in the terminal device is reported by the terminal device last time.

77. The communication device of any one of claims 61 to 76, wherein the receiving unit is specifically configured to:
in response to the first communication device sending a first request, receive the first information from the terminal device.

78. The communication device of any one of claims 61 to 77, wherein the first message carrying the first information further transmits data.

79. The communication device of claim 78, wherein in case that resources allocated to the first message remain after the first message has fully carried the data to be transmitted, the first information is carried in the first message.

80. The communication device of any one of claims 61 to 79, wherein the terminal device is a zero power terminal device.

81. A terminal device, comprising: a processor and a memory, wherein the memory is configured to store a computer program, and the processor is configured to invoke the computer program stored in the memory to cause the terminal device to perform the method of any one of claims 1 to 20.

82. A communication device, comprising: a processor and a memory, wherein the memory is used to store a computer program, and the processor is configured to invoke the computer program stored in the memory to cause the communication device to perform the method of any one of claims 21 to 40.

83. An apparatus, comprising a processor configured to invoke a program from a memory to cause the apparatus to perform the method of any one of claims 1 to 40.

84. A chip, comprising a processor configured to invoke a program from a memory to cause a device on which the chip is mounted to perform the method of any one of claims 1 to 40.

85. A computer readable storage medium having stored thereon a program that causes a computer to perform the method of any one of claims 1 to 40.

86. A computer program product, comprising a program that causes a computer to perform the method of any one of claims 1 to 40.

87. A computer program that causes a computer to perform the method of any one of claims 1 to 40.
